# EUROPEAN PATENT APPLICATION

(11) **EP 4 357 839 A1**
(43) Date of publication of application: **24.04.2024**
(21) Application number: 23716754.9
(22) Date of filing: 03.04.2023
(51) Int. Cl.: G02B 27/01, G06F 1/16, G02C 5/00, G02C 5/22

(54) **ELECTRONIC DEVICE COMPRISING HINGE**

(30) Priority: 06.09.2022 KR 20220112602; 13.10.2022 KR 20220131534
(71) Applicant: Samsung Electronics Co., Ltd., Suwon-Si, Gyeonggi-do 16677 (KR)
(72) Inventor: HONG, Myeongjae, Suwon-si Gyeonggi-do 16677 (KR)
(74) Representative: Gulde & Partner
(86) International application number: PCT/KR2023/004470
(87) International publication number: WO 2024/053806

(57) **Abstract**

An electronic device according to an embodiment may include at least one display, a main frame mounted with the at least one display and including at least one antenna, at least one support frame including a communication module, and a hinge module rotatably interconnecting the main frame and the at least one support frame. The hinge module may include a first hinge arm coupled to the main frame and including a first conductive pattern on at least one surface thereof, and a second hinge arm coupled to the at least one support frame, rotatably connected to the first hinge arm, and including, on a surface facing the at least one surface of the first hinge arm, a second conductive pattern at least partially overlapping the first conductive pattern. The at least one antenna and the communication module may be electrically connected to each other via the first conductive pattern and the second conductive pattern. Various other embodiments identified through the specification are possible.

## Description

### [Technical Field]

Various embodiments disclosed herein relate to an electronic device including a hinge.

### [Background Art]

Augmented reality (AR) may be a technique of projecting a virtual image onto a real-world physical space or object to show the virtual image with the real-world physical space or object, as a single image. The augmented reality shows a virtual image superimposed on a real space and may be used to provide information about an object in the real-world space and the virtual image.

Wearable electronic devices may include various types of electronic devices wearable by users. The electronic devices may include, for example, augmented reality glasses worn on a face by a user, a head mounted display apparatus (HMD) worn on a head, or smart glasses in the form of an augmented reality helmet.

A wearable electronic device may provide an augmented reality scene showing visual information (e.g., a virtual image) superimposed on what a wearer actually sees (e.g., a real image) or showing information about an object in a real-world space and a virtual image to a wearer.

The electronic device providing augmented reality may transmit/receive a signal to/from an external device and may be equipped with an antenna for wireless communication between electronic components inside the device. When an electronic device includes a hinge, the electronic device may require an electrical connection structure passing through a hinge for wireless communication between electronic components inside the device.

### [Disclosure of Invention]

### [Solution to Problem]

An electronic device according to an embodiment of the disclosure may include at least one display, a main frame mounted with the at least one display and including at least one antenna, at least one support frame including a communication module, and a hinge module rotatably interconnecting the main frame and the at least one support. The hinge module may include a first hinge arm coupled to the main frame and including a first conductive pattern on at least one surface thereof, and a second hinge arm coupled to the at least one support frame, rotatably connected to the first hinge arm, and including, on a surface facing the at least one surface of the first hinge arm, a second conductive pattern at least partially overlapping the first conductive pattern. The at least one antenna and the communication module may be electrically connected to each other via the first conductive pattern and the second conductive pattern.

A wearable electronic device according to an embodiment of the disclosure may include a first display for a left eye image, a second display for a right eye image, a main frame mounted with the first display and the second display and including at least one antenna, a first support frame including a communication module and rotatably connected to the main frame by a first hinge module, and a second support frame rotatably connected to the main frame by a second hinge module located at an opposite side to the first hinge module. The first hinge module may further include a first hinge arm coupled to the main frame and including a first conductive pattern on at least one surface thereof, and a second hinge arm coupled to the first support frame, rotatably connected to the first hinge arm, and including, on a surface facing the at least one surface of the first hinge arm, a second conductive pattern at least partially overlapping the first conductive pattern. The at least one antenna and the communication module may be electrically connected to each other via the first conductive pattern and the second conductive pattern.

### [Brief Description of Drawings]

FIG. 1 is a perspective view illustrating an electronic device according to an embodiment.
FIG. 2 is a plan views illustrating an unfolded state and a folded state of an electronic device according to an embodiment.
FIG. 3 is a plan view illustrating a hinge module according to an embodiment.
FIG. 4 is a plan view illustrating a first hinge arm and a second hinge arm according to an embodiment.
FIG. 5 is a transparent perspective view obtained by viewing the first hinge arm and the second hinge arm in a direction from the top side toward the bottom side in an unfolded state of the hinge module according to an embodiment.
FIG. 6 is a transparent perspective view obtained by viewing the first hinge arm and the second hinge arm of FIG. 5 according to an embodiment in a direction from the bottom side toward the top side.
FIG. 7 is a plan view obtained by viewing the first hinge arm and the second hinge arm of FIG. 5 according to an embodiment in the direction from the top side toward the bottom side.
FIG. 8 is a transparent perspective view obtained by viewing the first hinge arm and the second hinge arm in the direction from the top side toward the bottom side in a folded state of the hinge module according to an embodiment.
FIG. 9 is a plan view obtained by viewing the first hinge arm and the second hinge arm of FIG. 8 according to an embodiment in the direction from the top side toward the bottom side.
FIG. 10 is a block diagram of an electronic device according to various embodiments in a network environment.

In connection with the description of the drawings, the same or similar components may be denoted by the same or similar reference numerals.

### [Best Mode for Carrying out the Invention]

Hereinafter, various embodiments of the disclosure will be described with reference to the accompanying drawings. However, it should be appreciated that they are not intended to limit the disclosure to particular embodiments, and the disclosure should be construed to cover various modifications, equivalents, and/or alternatives of the embodiments of the disclosure.

An electronic device according to various embodiments of the disclosure may include at least one of, for example, a smartphone, a tablet personal computer (PC), a mobile phone, a video phone, an electronic book reader (e-book reader), a desktop PC, a laptop PC, a netbook computer, a workstation, a server, a personal digital assistant (PDA), a portable multimedia player (PMP), a MPEG-1 audio layer-3 (MP3) player, a mobile medical device, a camera, and a wearable device. The wearable device may include at least one of an accessory type (e.g., watch, ring, bracelet, anklet, necklace, glasses, contact lens, or head-mounted device (HMD)), a fabric or clothing-integrated type (e.g., electronic clothing), a body-mounted type (e.g., skin pad, or tattoo), and a bio-implantable type (e.g., implantable circuit).

In some embodiments, the electronic device may include at least one of, for example, a television, a digital video disk (DVD) player, an audio, a refrigerator, an air conditioner, a vacuum cleaner, an oven, a microwave oven, a washing machine, an air purifier, a set-top box, a home automation control panel, a security control panel, a TV box, a game console, an electronic dictionary, an electronic key, a camcorder, and an electronic photo frame.

In other embodiments, the electronic device may include at least one of various medical devices (e.g., various portable medical measuring devices (blood glucose monitoring device, heart rate monitoring device, blood pressure measuring device, body temperature measuring device, etc.), magnetic resonance angiography (MRA), magnetic resonance imaging (MRI), computed tomography (CT) machine, ultrasonic machine, etc.), a navigation device, a global positioning system (GPS) receiver, an event data recorder (EDR), a flight data recorder (FDR), a vehicle infotainment device, electronic equipment for a ship (e.g., ship navigation device, gyro-compass, etc.), avionics, a security device, an automobile head unit, a home or industrial robot, an automatic teller's machine (ATM) in banks, point of sales (POS) in a shop, or Internet of things devices (e.g., light bulb, various sensors, electric or gas meter, sprinkler device, fire alarm, thermostat, streetlamp, toaster, sporting goods, hot water tank, heater, boiler, etc.).

According to some embodiments, the electronic device may include at least one of a part of furniture or a building/structure, an electronic board, an electronic signature receiving device, a projector, and various kinds of measuring instruments (e.g., water meter, electric meter, gas meter, radio wave meter, etc.). In various embodiments, the electronic device may be a combination of one or more of the aforementioned various devices. According to some embodiments, the electronic device may a flexible electronic device. Further, the electronic device according to an embodiment of the disclosure is not limited to the aforementioned devices, and may include a new electronic device according to the development of technology.

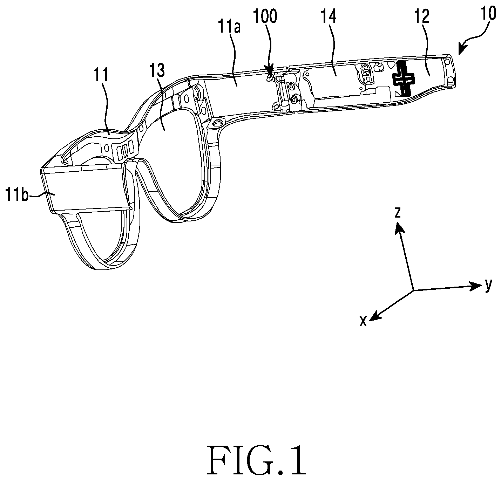

An electronic device (e.g., the electronic device 10 of FIG. 1) of the disclosure may include an augmented reality device.

In the disclosure, "augmented reality (AR)" refers to showing a virtual image together within a real-world physical environment space or showing a real object (e.g., a subject recognized in an image acquired through a camera) and a virtual image. An "augmented reality scene" may refer to a scene in which a virtual image is seen together within a real-world physical environment space or a scene in which a real object and a virtual image are seen together.

In addition, an "augmented reality device" (e.g., the electronic device 10 of FIG. 1) is a device capable of expressing "augmented reality" and may cover not only eyeglasses-shaped augmented reality glasses, which are generally worn on a face by a user, but also a head mounted display apparatus (HMD) or an augmented reality helmet, which is worn on a head. However, the augmented reality device is not limited thereto. For example, the augmented reality device may include a portable communication device (e.g., a smartphone), a computer device, a portable multimedia device, a portable medical device, a camera, a wearable device, or a home appliance, which displays a screen in which an augmented reality object is overlapped with an image captured with a camera.

Meanwhile, a "real scene" is a real-world scene that a user sees through an augmented reality device and may include a real object. A "virtual image" is an image generated through an optical engine and may include both a static image and a dynamic image. Such a virtual image is observed together with a real scene and may be an image representing information about a real object in a real scene, information about an operation of an augmented reality device, or a control menu.

Therefore, a general augmented reality device (e.g., the electronic device 10) may include an optical engine configured to generate a virtual image formed by light generated from a light source and a waveguide configured to guide the virtual image generated by the optical engine to a user's eyes and made of a transparent material so that a real-world scene can also be seen together with the virtual image. As described above, it is necessary for an augmented reality device to allow a real-world scene to be observed as well. Thus, in order to guide light generated by an optical engine to a user's eyes via a waveguide, an optical element for changing the path of light, which basically has a straight advancing property, may be required. In this case, the light path may be changed by using reflection by a mirror or may be changed through diffraction by a diffractive element such as a diffractive optical element (DOE) or a holographic optical element (HOE). However, the disclosure is not limited thereto.

Hereinafter, the disclosure will be described in detail with reference to the accompanying drawings.

FIG. 1 is a perspective view illustrating an electronic device 10 according to an embodiment.

According to an embodiment, the drawings of the disclosure illustrate a glasses-shaped electronic device, but the electronic device is not limited thereto. For example, the contents of the disclosure may be applied to various electronic devices including a flexible electronic device or a hinge, such as a foldable electronic device.

According to an embodiment, the electronic device 10 may include an electronic device, which is wearable by a user. For example, the electronic device 10 may cover not only glasses-shaped augmented reality glasses to be worn on a user's face, but also a head mounted display apparatus (HMD) or an augmented reality helmet to be worn on a head. However, the disclosure is not limited thereto. For the electronic device 10 according to various embodiments of the disclosure, an augmented reality electronic device in the form of glasses is described as a main subject, but the electronic device 10 is not limited thereto. Various embodiments of the disclosure may be applied to various electronic devices including a near-to-eye display. For example, various embodiments of the disclosure may be applied to augmented reality glasses in the form of goggles. A near-to-eye display may be understood as a type of display, of which a display panel is located very close to a user's eyes so that the display can be worn like glasses by a user.

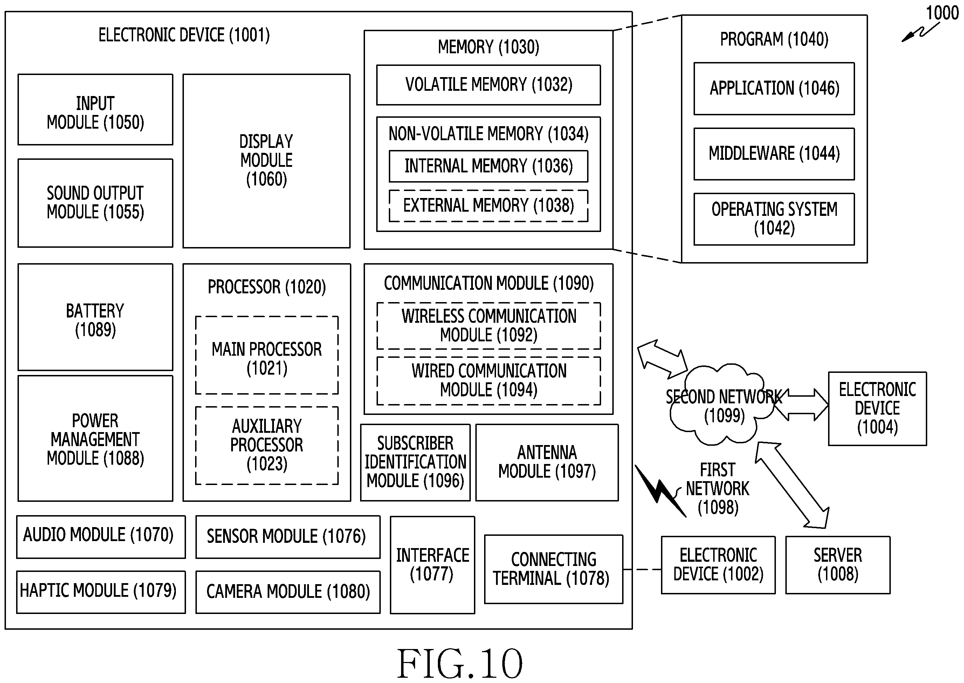

Referring to FIG. 1, the electronic device 10 may include a main frame 11, at least one support frame (e.g., a first support frame 12) connected to the main frame 11, and at least one display 13, and at least one hinge module (e.g., a first hinge module 100). However, the configuration of the electronic device 10 is not limited to the above-mentioned components. At least one of the above-mentioned components may be omitted from the electronic device 10, or the electronic device 10 may further include one or more other components. For example, although not illustrated in the drawing, the electronic device 10 may include at least one antenna (e.g., the antenna module 1097 of FIG. 10) disposed inside the main frame and a communication module 14 (e.g., a wireless communication integrated circuit (WiFi-IC) disposed inside the first support frame 12. Regarding the display module 1060 of FIG. 10, the description of the display 13 of FIG. 1 may be referred to, and regarding the communication module 1090 of FIG. 10, the description of the communication module 14 of FIG. 1 may be referred to.

According to an embodiment, when a user wears the electronic device 10, the main frame 11 may block the user's field of view or may be placed on the user's field of view path. For example, the main frame 11 may cover at least a portion of the user's face when the user wears the electronic device 10.

According to an embodiment, the main frame 11 may include a first connection portion 11a physically connected to the first support frame 12 and a second connection portion 11b disposed on the opposite side to the first connection portion 11a. The first connection portion 11a may be disposed to be symmetrical with the second connection portion 11b with respect to the main frame 11. However, the disclosure is not limited thereto.

According to an embodiment, the at least one support frame may include a first support frame 12 connected to the main frame 11 via the first connection portion 11a, and a second support frame (not illustrated) connected to the main frame 11 via the second connection portion 11b.

According to an embodiment, the first support frame 12 may be placed on the user's right ear. Although not illustrated in FIG. 1, the end portion of the first support frame 12 may be configured in a bent shape behind the right ear to be placed on the right ear. According to an embodiment, a second support frame (not illustrated) may be disposed on the opposite side to the first support frame 12. The second support frame may be placed on the user's left ear. The end portion of the second support frame may be bent behind the left ear to be placed on the left ear. However, the disclosure is not limited thereto.

According to an embodiment, the at least one support frame may be rotatably connected to the main frame 11 by a hinge module (e.g., a first hinge module 100). For example, the first support frame 12 may be rotatable within a predetermined range of angle around the main frame 11 (or the first connection portion 11a). The second support frame (not illustrated) may rotate around the main frame 11 within a predetermined range of angle.

According to an embodiment, at least one display 13 providing an augmented reality scene may be disposed (or mounted) on the main frame 11. The electronic device 10 may display an augmented reality image through the display 13. For example, the display 13 may transmit light of a real environment (or a real object), and the user may recognize the light of the real environment transmitted through the display 13. In another example, the display 13 may include a transparent display capable of displaying an image of a virtual object while transmitting light of a real object. For example, the electronic device 10 may display an image of a virtual object via the display 13, and the user may recognize the real object and the virtual object via the display 13 of the electronic device 10. Accordingly, the electronic device 10 may provide augmented reality to the user. However, the disclosure is not limited to displaying augmented reality images.

According to an embodiment, the display 13 may include at least one of a first display for a left eye image or a second display for a right eye image. At least one of the first display for the left eye image or the second display for the right eye image may be disposed on the main frame 11. For example, a display 13 may be used for a right eye only or for a left eye only.

According to an embodiment, at least one of the first display or the second display may include one of a near-to-eye display (NED) or a head mounted display (HMD). For example, at least a portion of the electronic device 10 may include a light waveguide, and one area of the light waveguide may include a see-through display. The see-through display may be located very close to the user's eyes, and the user may wear the electronic device 10 including the see-through display, like glasses. According to another embodiment, a projector capable of projecting light onto at least a portion of the electronic device 10 to recognize an object through reflected light may be included.

According to an embodiment, when the electronic device includes a hinge module (e.g., the first hinge module 100), the hinge module may fix the main frame 11 and at least one support frame (e.g., the first support frame 12) and allows the at least one support frame to be rotated around the main frame 11. The description of the second support frame may be equally applied to the first support frame 12 except for the direction of rotation.

According to an embodiment, at least one antenna (not illustrated) may be mounted on at least a portion of the main frame 11. For example, a first antenna may be disposed in an area adjacent to the first connection portion 11a, and a second antenna may be disposed in an area adjacent to the second connection portion 11b. However, the disclosure is not limited thereto. For example, the whole or a portion of the main frame 11 may constitute an antenna by operating as a radiator. For example, a conductive portion constituting a portion of the first connection portion 11a or the second connection portion 11b may constitute an antenna by operating as a radiator.

According to an embodiment, at least one communication module may be mounted on at least a portion of the first support frame 12. For example, a wireless communication integrated circuit may be mounted on at least a portion of the first support frame 12. However, the disclosure is not limited thereto. In an example, a communication module may be mounted on at least a portion of the second support frame may be mounted with, or communication modules may be mounted on both the first support frame 12 and the second support frame.

According to an embodiment, the communication module may be electrically connected to at least one antenna. The communication module may require a physical connection member, such as a flexible printed circuit board (FPCB) or a cable, passing through a hinge structure to electrically connect the communication module to at least one antenna. However, in the case where the electronic device includes a cable as the physical connection member, since the cable passes through the hinge structure, the space for mounting the cable increases, and thus the volume of the electronic device may increase. In the case where the electronic device includes a flexible printed circuit board as the physical connection member, the flexible printed circuit board may be bent when the hinge structure is folded or unfolded. The flexible printed circuit board may be fastened to a connector. Accordingly, impedance discontinuity may increase, and antenna performance may deteriorate due to the occurrence of parasitic resonance. In addition, the wiring area of the flexible printed circuit board may increase, and the volume of the electronic device may increase.

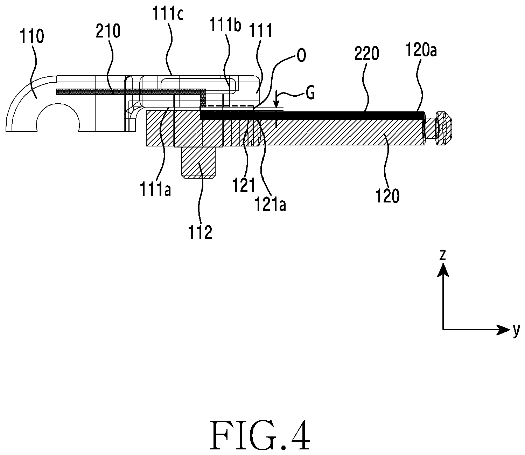

According to an embodiment, the electronic device 10 of the disclosure may include at least one conductive pattern provided on a hinge module (e.g., the first hinge module 100), so that the electronic device 10 may transmit an RF signal through the at least one conductive pattern. Since the at least one conductive pattern has a small volume, the volume of the electronic device 10 may be reduced and antenna performance may be improved. Details of at least one conductive pattern provided on the hinge module (e.g., the first hinge module 100) according to an embodiment will be described later with reference to FIGS. 4 to 9.

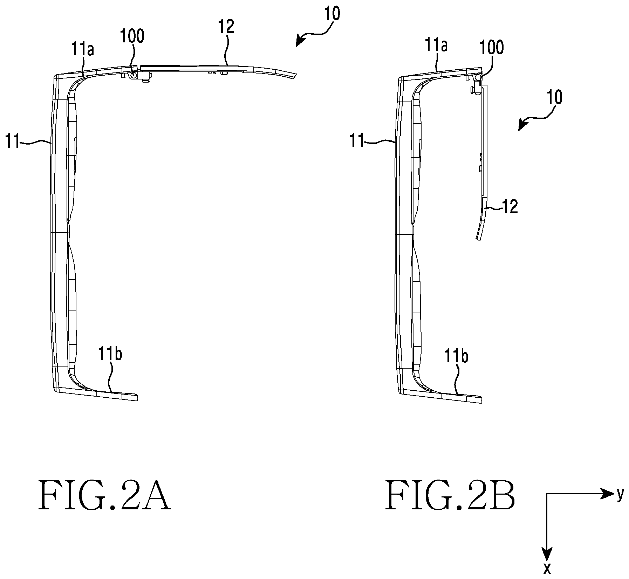

of FIG. 2 and (b) of FIG. 2 are views illustrating an unfolded state ((a) of FIG. 2) and a folded state ((b) of FIG. 2) of the electronic device 10 according to an embodiment.

Regarding the electronic device 10 of (a) of FIG. 2 and (b) of FIG. 2, the description of the electronic device 10 of FIG. 1 may be referred to. The same terms and/or the same reference numerals are used for the same or substantially the same components as those described above, and redundant descriptions will be omitted.

According to an embodiment, the description of the second support frame (not illustrated) may be equally applied to the first support frame 12 except for the direction of rotation.

According to an embodiment, the unfolded state of the disclosure (e.g., (a) of FIG. 2) may mean the state in which the first support frame 12 is completely unfolded with respect to the main frame 11 (or the first connection portion 11a). For example, the unfolded state may mean the state in which the first connection portion 11a and the first support frame 12 are substantially parallel, or the state in which the electronic device 10 is worn on the user's body. However, the disclosure is not limited thereto.

According to an embodiment, the folded state of the disclosure (e.g., (b) of FIG. 2) may mean the state in which the first support frame 12 is rotated by a predetermined angle about the main frame 11 (or the first connection portion 11a). For example, the folded state of the disclosure may include the completely folded state as illustrated in (b) of FIG. 2 as well as a state between folding and unfolding.

According to an embodiment, the main frame 11 may be connected to the first support frame 12. For example, the first connection portion 11a may be connected to the first support frame 12, and the second connection portion 11b may be connected to the second support frame. According to an embodiment, at least one support frame may be rotatably connected to the main frame 11 by a hinge module. For example, the first support frame 12 may be rotatable within a predetermined range of angle around the main frame 11 (or the first connection portion 11a) via the first hinge module 100. The second support frame (not illustrated) may rotate within a predetermined range of angle around the main frame 11 via a second hinge module (not illustrated). The predetermined ranges of angles for the first support frame 12 and the second support frame may be the same or may be different. For the second hinge module (not illustrated), the description of the first hinge module 100 may be referred to, except that the second hinge module is different from the first hinge module 100 in position and/or bending direction.

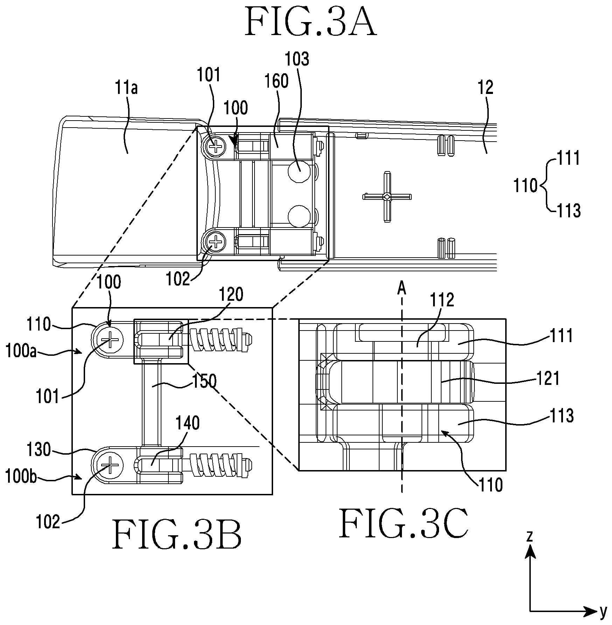

Details on the structure and operation of the first hinge module 100 according to an embodiment will be described later with reference to FIG. 3.

FIG. 3 is a plan view illustrating the first hinge module 100 according to an embodiment.

For the first hinge module 100, the first connection portion 11a, and the first support frame 12 of FIG. 3, the descriptions of the first hinge module 100, the first connection portion 11a, and the first support frame 12 of FIGS. 1 and 2 may be referred to, respectively. The same terms and/or the same reference numerals are used for the same or substantially the same components as those described above, and redundant descriptions will be omitted.

of FIG. 3 may be a view illustrating the state in which the first connection portion 11a and the first support frame 12 are connected to each other by the first hinge module 100. (b) of FIG. 3 may be a view illustrating the first hinge module 100 according to an embodiment, (c) of FIG. 3 may be an enlarged view of a portion of a first hinge unit 100a of the first hinge module 100.

Referring to (a) of FIG. 3, the first support frame 12 according to an embodiment may be connected to the main frame (the main frame 11 of FIG. 1) by the first hinge module 100. For example, the first support frame 12 may be connected to the first connection portion 11a of the main frame 11 by the first hinge module 100.

According to an embodiment, the first hinge module 100 may be fixed to the main frame 11 (or the first connection portion 11a) by the fixing members 101 and 102. In the drawing, the fixing members 101 and 102 are illustrated as screws but are not limited thereto. For example, the fixing members 101 and 102 may include an adhesive member such as an adhesive tape or bond.

According to an embodiment, the first hinge module 100 may be fixed to the first support frame 12 by a fixing member 160. In the drawing, the first hinge module 100 is illustrated as being fixed to the first support frame 12 by the fixing member 160 fixed to the first support frame 12 by a fixing structure 103 but is not limited thereto. For example, the first hinge module 100 may be fixed to the first support frame 12 by a screw or an adhesive member such as an adhesive tape or bond.

Referring to (b) of FIG. 3, the first hinge module 100 according to an embodiment may include a first hinge unit 100a and a second hinge unit 100b spaced apart from the first hinge unit 100a by a predetermined gap. However, the configuration of the first hinge module 100 is not limited thereto. For example, at least one hinge unit described above may be omitted from the first hinge module 100 or the first hinge module 100 may further include at least one other hinge unit.

According to an embodiment, the first hinge unit 100a may be connected to the second hinge unit 100b by at least one connection structure 150. In an example, due to the connection structure 150, the first hinge unit 100a and the second hinge unit 100b may pivot together, i.e. simultaneously.

According to an embodiment, the first hinge unit 100a may include a first hinge arm 110 fixed to the first connection portion 11a by a first fixing member 101 and a second hinge arm 120 rotatably connected to the first hinge arm 110 and fixed to the first support frame 12.

According to an embodiment, the second hinge unit 100b may include a third hinge arm 130 fixed to the first connection portion 11a by a second fixing member 102 and a fourth hinge arm 140 rotatably connected to the third hinge arm 130 and fixed to the first support frame 12.

Referring to (c) of FIG. 3, the first hinge arm 110 may include a first hinge portion 111 connected to the second hinge arm 120. The second hinge arm 120 may include a rotation portion 121 rotatably connected to the first hinge portion 111. Since the rotation portion 121 is rotatably connected to the first hinge portion 111, when the rotation portion 121 rotates with respect to the first hinge portion 111, the second hinge arm 120 may rotate with respect to the first hinge arm 110.

According to an embodiment, the second hinge arm 120 may be rotatable within a predetermined range of angle with respect to the first hinge arm 110 by a pin member 112. The pin member 112 penetrates at least a portion of the second hinge arm 120 and at least a portion of the first hinge arm 110, thereby allowing the first hinge arm 110 and the second hinge arm 120 to rotate with respect to each other. For example, the pin member 112 may penetrate at least a portion of the first hinge portion 111 and at least a portion of the rotation portion 121, thereby allowing the rotation portion 121 to rotate with respect to the first hinge portion 111.

According to an embodiment, the first hinge arm 110 may further include a second hinge portion 113 spaced apart from the first hinge portion 111 by a predetermined gap. The rotation portion 121 of the second hinge arm 120 may be disposed between the first hinge portion 111 and the second hinge portion 113.

According to an embodiment, the second hinge portion 113 may be rotatable within a predetermined range of angle with respect to the first hinge portion 111 by the pin member 112. The pin member 112 penetrates at least a portion of the second hinge portion 113 and at least a portion of the first hinge portion 111, thereby allowing the first hinge portion 111 and the second hinge portion 113 to rotate with respect to each other. For example, the pin member 112 penetrates at least a portion of the first hinge portion 111, at least a portion of the second hinge portion 113, and at least a portion of the rotation portion 121, thereby allowing the rotation portion 121 to rotate with respect to the hinge portion 111 and the second hinge portion 113. Referring to (c) of FIG. 3, a central axis of the pin member 112 may be a rotation axis A around which the second hinge arm 120 rotates with respect to the first hinge arm 110.

According to an embodiment, at least one surface of the first hinge arm 110 and at least one surface of the second hinge arm 120 may face each other. The second hinge arm 120 may face the at least one surface of the first hinge arm 110 in the state of being spaced apart from the at least one surface of the first hinge arm 110 by a predetermined gap.

FIG. 4 is a plan view illustrating the first hinge arm 110 and the second hinge arm 120 according to an embodiment.

For the first hinge arm 110 and the second hinge arm 120 of FIGS. 1 to 3, the description of the first hinge arm 110 and the second hinge arm 120 of FIG. 4 may be referred to. For example, FIG. 4 may be a view illustrating the first hinge portion 111 and the second hinge arm 120 of the first hinge arm 110 of (c) of FIG. 3. The same terms and/or the same reference numerals are used for the same or substantially the same components as those described above, and redundant descriptions will be omitted.

Referring to FIG. 4, the first hinge arm 110 may include a first conductive pattern 210 on at least one surface thereof. In an example, the first hinge portion 111 may include the first conductive pattern 210 on hinge portion 111 thereof.

According to an embodiment, the first hinge portion 111 may include a first surface 111a oriented in a first direction (e.g., the -z-axis direction), a second surface 111c oriented in a second direction opposite to the first direction (e.g., the +z-axis direction), and a side surface 111b that at least partially surrounds the space between the first surface 111a and the second surface 111c. However, the shape of the first hinge portion 111 is not limited thereto. For example, the first hinge portion 111 may include a curved surface that is seamlessly curved from the top surface (e.g., the second surface 111c) to the bottom surface (e.g., the first surface 111a).

According to an embodiment, the first conductive pattern 210 may be provided along a portion of the side surface 111b and may extend to the first surface 111a. However, the shape of the first conductive pattern 210 may not be limited to the shape of FIG. 4. For example, the first conductive pattern 210 may have a different shape overlapping at least a portion of the second conductive pattern 220.

According to an embodiment, the shapes of the hinge modules (e.g., the first hinge arm 110 and the second hinge arm 120) of the disclosure are not limited to those illustrated in the drawings. For example, the description of the conductive pattern of the disclosure may be applied to various shapes of hinge modules including a first hinge arm 110 and a second hinge arm 120 having at least one surface facing the first hinge arm 110.

According to an embodiment, the second hinge arm 120 may include a second conductive pattern 220 on at least one surface thereof. In an example, the second hinge arm 120 may include the second conductive pattern 220 on the surface facing the at least one surface of the first hinge arm 110 on which the first conductive pattern 210 is provided. In an example, the rotation portion 121 may include the second conductive pattern 220 on the surface facing the at least one surface of the first hinge portion 111 on which the first conductive pattern 210 is provided.

According to an embodiment, at least one surface of the rotation portion 121 may face the first surface 111a of the first hinge portion 111. For example, the top surface 121a of the rotation portion 121, which is oriented in the +z-axis direction, may face the first surface 111a. The top surface 121a of the rotation portion 121, which faces the first surface 11 1a of the first hinge portion 111, may include the second conductive pattern 220. Accordingly, the first conductive pattern 210 may at least partially overlap the second conductive pattern 220. An area O illustrated in FIG. 4 may mean an area in which the first conductive pattern 210 and the second conductive pattern 220 overlap each other.

According to an embodiment, the second conductive pattern 220 may be provided along the longitudinal direction (e.g., in the +x axis direction) of the first support frame (e.g., the first support frame 12 in FIG. 1) from the top surface 120a of the second hinge arm 120 that is oriented in the +z axis direction (e.g., the top surface 121a of the rotation portion 121).

According to an embodiment, although not illustrated in FIG. 4, when the first hinge arm 110 includes the second hinge portion (the second hinge portion 113 of FIG. 3), the second hinge portion may include a third conductive pattern (not illustrated) at least partially overlapping the second conductive pattern 220. For example, the third conductive pattern may be provided on the top surface (in the +z-axis direction) of the second hinge portion, and the second conductive pattern 220 may be further provided on the rear surface opposite (e.g., in the -z axis direction) to the top surface 121a of the rotation portion 121 that faces the first surface 111a of the first hinge portion 111. For the third conductive pattern, the description of the first conductive pattern 210 may be referred to, except for the fact that the third conductive pattern is different from the first conductive pattern in disposed position.

According to an embodiment, the first hinge portion 111 may be spaced apart from the rotation portion 121 by a predetermined gap. For example, referring to FIG. 4, the first hinge portion 111 may be spaced apart from the rotation portion 121 by a first gap G. When the first gap G is within a predetermined range, the first hinge portion 111 may include the first conductive pattern 210, and the rotation portion 121 may include the second conductive pattern 220, whereby the first hinge module 100 may form a capacitance. According to an embodiment, the electronic device may transmit an RF signal through the formed capacitance.

According to an embodiment, the RF signal may have a characteristic of passing through a capacitor having a specific capacitance value without a significant loss. The first hinge portion 111 and the rotation portion 121 may have a first gap G therebetween, the first hinge portion 111 may include the first conductive pattern 210, and the rotation portion 121 may include the second conductive pattern 220. The first conductive pattern 210 and the second conductive pattern 220 may be electrically or operatively connected to a printed circuit board or a flexible printed circuit board via a medium (e.g., a C-clip). For example, a portion of the first conductive pattern 210 and/or the second conductive pattern 220 may be electrically or operatively connected to a printed circuit board or flexible printed circuit board included in a connection portion (e.g., the first connection portion 11a) or a support frame (e.g., the first support frame 12). According to an embodiment, the first hinge arm 110 may be electrically connected to the second hinge arm 120 (or the first hinge portion 111 and the rotation portion 121) via the first conductive pattern 210 and the second conductive pattern 220. Accordingly, at least one antenna (e.g., the antenna of FIG. 1) and a communication module (e.g., the communication module of FIG. 1) may be electrically connected to each other via the first conductive pattern 210 and the second conductive pattern 220.

According to an embodiment, the length of the first gap G may be 0.025 mm or less. However, the disclosure is not limited thereto. In an example, in the case where the length of the first gap G is 0.025 mm, when a 6 GHz coplanar waveguide (CPW) design is applied, an RF signal may pass through the hinge module with only a frequency signal loss of about -7 dB. In an example, in the case where the length of the first gap G is 0.01 mm, when a 6 GHz CPW design is applied, an RF signal may pass through the hinge module with only a frequency signal loss of about -2.5 dB.

According to an embodiment, via the first conductive pattern 210 and the second conductive pattern 220, at least one antenna (e.g., the antenna of FIG. 1) and a communication module (e.g., the communication module of FIG. 1) may be electrically connected to each other without including a physical connection member (e.g., a cable or a flexible printed circuit board). Accordingly, it is possible to reduce the volume of the electronic device. In addition, it is possible to prevent or reduce an increase in impedance discontinuity or deterioration of antenna performance due to the occurrence of parasitic resonance.

According to an embodiment, at least one of the first conductive pattern 210 or the second conductive pattern 220 may include at least one of a laser direct structuring (LDS) pattern, a conductive tape, or a flexible printed circuit board. However, the disclosure is not limited thereto.

According to an embodiment, at least one of the first conductive pattern 210 or the second conductive pattern 220 may be plated on the hinge module through injection molding. In an example, at least one of the first conductive pattern 210 or the second conductive pattern 220 may be provided through an LDS patterning method. The LDS patterning method may refer to a method of selectively processing a pattern by using a laser on a thermoplastic resin and then performing patterning through a plating process.

In an example, at least one of the first conductive pattern 210 or the second conductive pattern 220 may be patterned by attaching a conductive tape to the hinge module.

In an example, at least one of the first conductive pattern 210 or the second conductive pattern 220 may be patterned by using a flexible printed circuit board. For example, at least one of the first conductive pattern 210 or the second conductive pattern 220 may be patterned by bonding a copper foil on the flexible printed circuit board to the hinge module.

According to an embodiment, at least one of the first conductive pattern 210 or the second conductive pattern 220 may have a linear shape. In an example, the first conductive pattern 210 may be provided to extend from a medium (e.g., a C-clip), which allows the first conductive pattern 210 to be connected to a printed board, toward a portion overlapping the second conductive pattern 220. In an example, the second conductive pattern 220 may be provided to extend from a medium, which allows the second conductive pattern 220 to be connected to a circuit board, toward a portion overlapping the first conductive pattern 210. However, the disclosure is not limited thereto.

According to an embodiment, although not illustrated in FIG. 4, the hinge module (see the first hinge module 100 of FIG. 3) may further include a second hinge unit 100b including a third hinge arm 130 fixed to the first connection portion 11a by the second fixing member 102 and a fourth hinge arm 140 rotatably connected to the third arm 130 and fixed to the first support frame 12. When the hinge module further includes the second hinge unit 100b, the third hinge arm 130 may include a fourth conductive pattern (not illustrated) on at least one surface thereof, and the fourth hinge arm 140 may include a fifth conductive pattern (not illustrated) on a surface facing the at least one surface of the third hinge arm 130. The fifth conductive pattern may at least partially overlap the fourth conductive pattern. Regarding the second hinge unit 100b, the description of the first hinge unit 100a may be referred to. For example, regarding the fourth conductive pattern and the fifth conductive pattern, the description of the first conductive pattern 210 and the second conductive pattern 220 may be referred to.

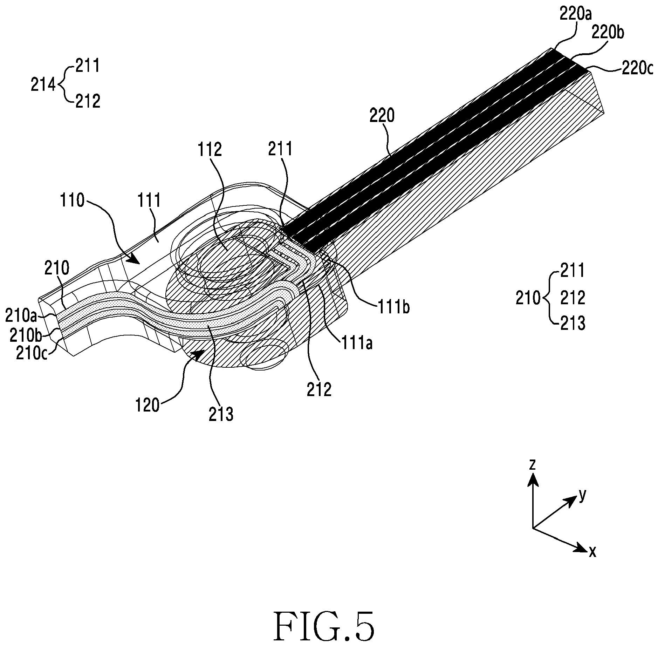

FIG. 5 is a transparent perspective view obtained by viewing the first hinge arm 110 and the second hinge arm 120 in a direction from the top side toward the bottom side (e.g., the -z-axis direction) in an unfolded state of the first hinge module 100 (e.g., (a) of FIG. 2) according to an embodiment.

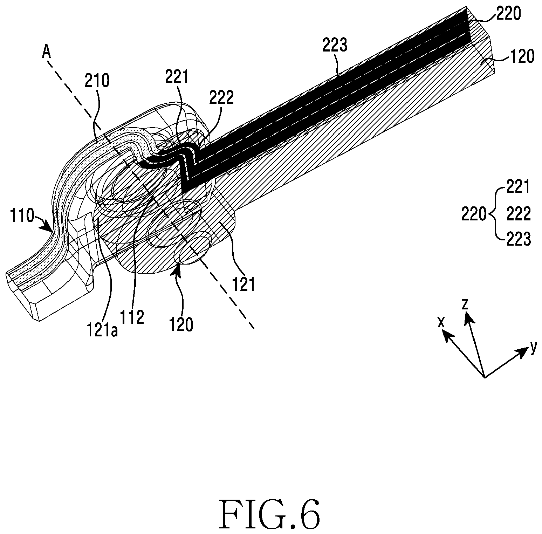

FIG. 6 is a transparent perspective view obtained by viewing the first hinge arm 110 and the second hinge arm 120 of FIG. 5 according to an embodiment in a direction from the bottom side toward the top side (e.g., the +z-axis direction).

For the first hinge arm 110 and the second hinge arm 120 of FIGS. 5 and 6, the description of the first hinge arm 110 and the second hinge arm 120 of FIGS. 1 to 4 may be referred to. The same terms and/or the same reference numerals are used for the same or substantially the same components as those described above, and redundant descriptions will be omitted.

Referring to FIG. 5, the first conductive pattern 210 according to an embodiment may include a first portion 213 provided on the side surface 111b along the side surface 111b, and a second portion 214 extending from the first portion and provided on the first surface 111a. According to an embodiment, the second portion 214 may include a shape surrounding at least a portion of the pin member 112 (or the rotation axis (A in FIG. 4) of the hinge module (100 in FIG. 4)). However, the shape of the first conductive pattern 210 is not limited thereto.

According to an embodiment, the second portion 214 may include a first part 212 extending from the first portion 213 and a second part 211 extending from the first portion 212. According to an embodiment, the first part 212 can be bent at least once. For example, referring to FIG. 5, the first part 212 may include a shape bent at least once toward the pin member 112 (or toward the rotation axis (rotational axis A in FIG. 6)) (e.g., in the -x-axis direction). The second part 211 may include a shape bent at least once in toward the outside of the first hinge portion 111 (e.g., in the +y-axis direction). However, the shape of the first conductive pattern 210 may not be limited to the shape of FIG. 5.

Referring to FIG. 6, the second conductive pattern 220 may include a first portion 223 provided to be oriented in the longitudinal direction of the support frame (12 in FIG. 1) (or the second hinge arm 120) (e.g., the y-axis direction) on the top surface (e.g., the surface oriented in the +z-axis direction) of the second hinge arm 120, and a second portion (e.g., the second portion 214 in FIG. 5) extending from the first portion 223 and provided on the top surface 121a of the rotation portion 121 in the +x-axis direction.

According to an embodiment, the second portion may include a first part 222 extending from the first portion 223 and a second part 221 extending from the first part 222. According to an embodiment, the first part 222 can be bent at least once. For example, referring to FIG. 6, the first part 222 may include a shape bent at least once toward the outside of the rotation portion 121. The second part 221 may include a shape bent at least once toward the pin member 112 (or toward the rotation axis A of the hinge module (the first hinge module 100 of FIG. 4)). However, the shape of the second conductive pattern 220 is not limited to the shape of FIG. 6.

According to an embodiment, referring to FIGS. 5 and 6, at least one of the first conductive pattern 210 or the second conductive pattern 220 may include a shape configured with a plurality of lines.

In an example, the first conductive pattern 210 may include a first ground pattern 210a, a second ground pattern 210c provided to be substantially parallel to the first ground pattern 210a, and an RF signal pattern 210b disposed between the first ground pattern 210a and the second ground patterns 210c and provided to be substantially parallel to the first ground pattern 210a.

In an example, the second conductive pattern 220 may include a first ground pattern 220a, a second ground pattern 220c provided to be substantially parallel to the first ground pattern 220a, and an RF signal pattern 220b disposed between the first ground pattern 220a and the second ground patterns 220c and provided to be substantially parallel to the first ground pattern 220a.

According to an embodiment, at least one of the first conductive pattern 210 or the second conductive pattern 220 may include an RF signal pattern.

According to an embodiment, a conductive pattern (e.g., the first conductive pattern 210) design method may include a CPW design method. In this case, the first conductive pattern 210 and the second conductive pattern 220 may include a single layer. However, the disclosure is not limited thereto. The first conductive pattern 210 and the second conductive pattern 220 may include a two or more-layer structure. In addition, the conductive pattern design method is not limited to the CPW design method. For example, the conductive pattern (e.g., the first conductive pattern 210) design method may include various design methods of designing a conductive pattern having two or more layers to have a shape such as a strip line.

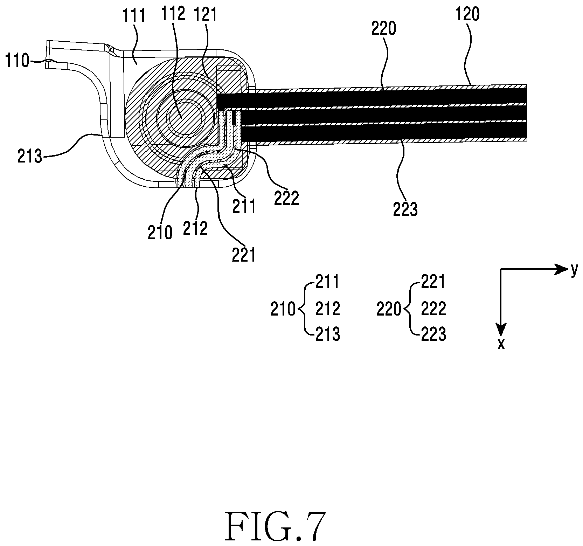

FIG. 7 is a transparent perspective view obtained by viewing the first hinge arm 110 and the second hinge arm 120 of FIG. 5 according to an embodiment in the direction from the top side toward the bottom side (e.g., the -z-axis direction in FIG. 5).

Regarding the first hinge arm 110 and the second hinge arm 120 of FIG. 7, the description of the first hinge arm 110 and the second hinge arm 120 of FIGS. 1 to 6 may be referred to. The same terms or the same reference numerals are used for the same or substantially the same components as those described above, and redundant descriptions will be omitted.

Referring to FIG. 7, according to an embodiment, the shape of a portion provided on a surface (e.g., the top surface 121A in FIG. 4) of the second conductive pattern 220 facing the first surface (111a in FIG. 4) (e.g., the shape of the second portion 221 and 222 provided on the rotation portion 121) may correspond to the shape of the second portion 211 and 212 of the first conductive pattern 210. For example, when viewing the first hinge arm 110 and the second hinge arm 120 in the direction from the top side toward the bottom portion (e.g., the -z axis direction in FIG. 5), a portion of the second conductive pattern 220 (e.g., the second portion 221 and 222) may be hidden by a portion of the first conductive pattern 210 (e.g., a portion of the second portion 211 and 212) to be invisible. However, the disclosure is not limited thereto.

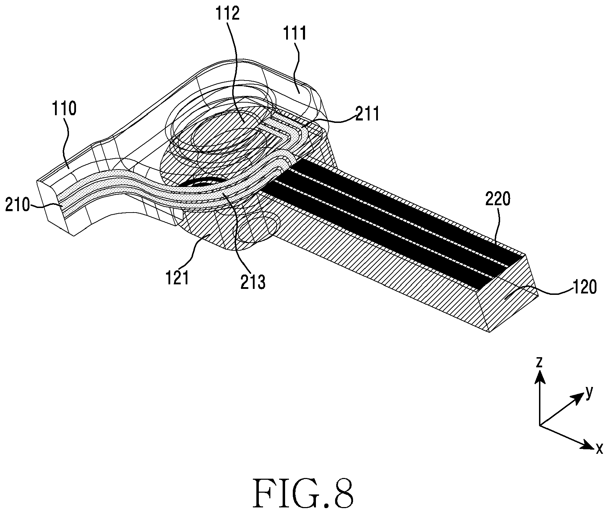

FIG. 8 is a transparent perspective view obtained by viewing the first hinge arm 110 and the second hinge arm 120 in a direction from the top side toward the bottom side (e.g., the -z-axis direction) in a folded state ((b) of FIG. 2) of the hinge module (e.g., 100 in (a) of FIG. 2 and (b) of FIG. 2) according to an embodiment.

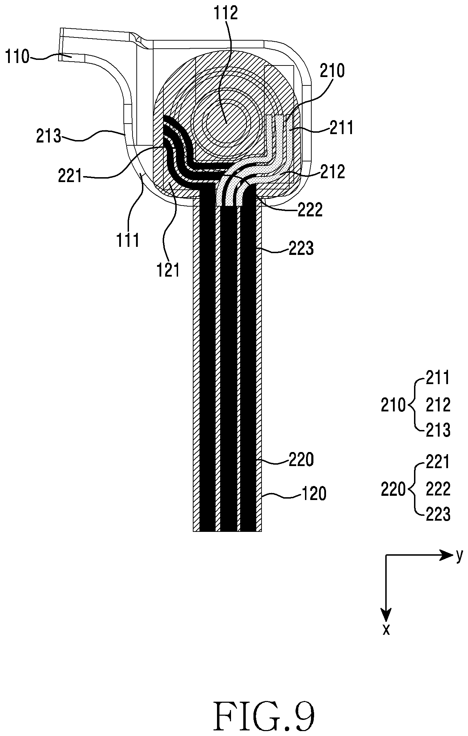

FIG. 9 is a transparent perspective view obtained by viewing the first hinge arm 110 and the second hinge arm 120 of FIG. 8 according to an embodiment in the direction from the top side toward the bottom side (e.g., the -z-axis direction).

For the first hinge arm 110 and the second hinge arm 120 of FIGS. 8 and 9, the description of the first hinge module 100, the first hinge arm 110, and the second hinge arm 120 of FIGS. 1 to 7 may be referred to. Redundant descriptions of the same or substantially the same components as those described above will be omitted.

Referring to FIGS. 8 and 9, the second hinge arm 120 may rotate with respect to the first hinge arm 110 by a predetermined angle. For example, the rotation portion 121 may rotate with respect to the first hinge portion 111 by being connected to the first hinge portion 111 and the pin member 112.

According to an embodiment, since the second hinge arm 120 rotates with respect to the first hinge arm 110, the overlapping area between the first conductive pattern 210 of the first hinge portion 111 and the second conductive pattern 220 of the rotation portion 121 may decrease. For example, referring to FIG. 9, the second part 211 of the first conductive pattern 210 provided on the first surface (the first surface 111a in FIG. 4) of the first hinge portion 111 may not overlap the second part 221 of the second conductive pattern 220 provided on the top surface of the rotation portion 121 (e.g., the top surface 121a in FIG. 4). However, the disclosure is not limited thereto. For example, in the case where the shape of at least one of the first conductive pattern 210 or the second conductive pattern 220 is different from the shape illustrated in the drawing, the overlapping portion or area may become different.

According to an embodiment, the overlapping area between the first conductive pattern 210 and the second conductive pattern 220 in the case where the electronic device (e.g., the electronic device 10 of (a) of FIG. 2 and (b) of FIG. 2) is in an unfolded state may become different from that in the case where the electronic device (e.g., the electronic device 10 of (a) of FIG. 2 and (b) of FIG. 2) is in the folded state. For example, when comparing FIG. 7 and FIG. 9, when the electronic device is in the unfolded state as in FIG. 7, the first conductive pattern 210 overlaps the second conductive pattern 220 by a first area, and when the electronic device is in the folded state as in FIG. 9, the first conductive pattern 210 may overlap the second conductive pattern 220 by a second area. In this case, the first area may be greater than the second area. Since the first area is larger than the second area, RF signal transmittance may be improved when the user uses the electronic device. Accordingly, the performance of the electronic device (or the antenna performance) may be improved.

FIG. 10 is a block diagram illustrating an electronic device 1001 in a network environment 100 according to various embodiments. The electronic device 1001 of FIG. 10 may be referenced by the electronic device 10 of FIGS. 1 to 9.

Referring to FIG. 10, the electronic device 1001 in the network environment 1000 may communicate with an electronic device 1002 via a first network 1098 (e.g., a short-range wireless communication network), or at least one of an electronic device 1004 or a server 1008 via a second network 1099 (e.g., a long-range wireless communication network). According to an embodiment, the electronic device 1001 may communicate with the electronic device 1004 via the server 1008. According to an embodiment, the electronic device 1001 may include a processor 1020, memory 1030, an input module 1050, a sound output module 1055, a display module 1060, an audio module 1070, a sensor module 1076, an interface 1077, a connecting terminal 1078, a haptic module 1079, a camera module 1080, a power management module 1088, a battery 1089, a communication module 1090, a subscriber identification module (SIM) 1096, or an antenna module 1097. In some embodiments, at least one of the components (e.g., the connecting terminal 1078) may be omitted from the electronic device 1001, or one or more other components may be added in the electronic device 1001. In some embodiments, some of the components (e.g., the sensor module 1076, the camera module 1080, or the antenna module 1097) may be implemented as a single component (e.g., the display module 1060).

The processor 1020 may execute, for example, software (e.g., a program 1040) to control at least one other component (e.g., a hardware or software component) of the electronic device 1001 coupled with the processor 1020, and may perform various data processing or computation. According to one embodiment, as at least part of the data processing or computation, the processor 1020 may store a command or data received from another component (e.g., the sensor module 1076 or the communication module 1090) in volatile memory 1032, process the command or the data stored in the volatile memory 1032, and store resulting data in non-volatile memory 1034. According to an embodiment, the processor 1020 may include a main processor 1021 (e.g., a central processing unit (CPU) or an application processor (AP)), or an auxiliary processor 1023 (e.g., a graphics processing unit (GPU), a neural processing unit (NPU), an image signal processor (ISP), a sensor hub processor, or a communication processor (CP)) that is operable independently from, or in conjunction with, the main processor 1021. For example, when the electronic device 1001 includes the main processor 1021 and the auxiliary processor 1023, the auxiliary processor 123 may be adapted to consume less power than the main processor 1021, or to be specific to a specified function. The auxiliary processor 1023 may be implemented as separate from, or as part of the main processor 1021.

The auxiliary processor 1023 may control, for example, at least some of functions or states related to at least one component (e.g., the display module 1060, the sensor module 1076, or the communication module 1090) among the components of the electronic device 1001, instead of the main processor 1021 while the main processor 1021 is in an inactive (e.g., sleep) state, or together with the main processor 1021 while the main processor 1021 is in an active (e.g., executing an application) state. According to an embodiment, the auxiliary processor 1023 (e.g., an image signal processor or a communication processor) may be implemented as part of another component (e.g., the camera module 1080 or the communication module 1090) functionally related to the auxiliary processor 1023. According to an embodiment, the auxiliary processor 1023 (e.g., the neural processing unit) may include a hardware structure specified for artificial intelligence model processing. An artificial intelligence model may be generated by machine learning. Such learning may be performed, e.g., by the electronic device 1001 where the artificial intelligence model is performed or via a separate server (e.g., the server 1008). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1030 may store various data used by at least one component (e.g., the processor 1020 or the sensor module 1076) of the electronic device 1001. The various data may include, for example, software (e.g., the program 1040) and input data or output data for a command related thereto. The memory 1030 may include the volatile memory 1032 or the non-volatile memory 1034.

The program 1040 may be stored in the memory 1030 as software, and may include, for example, an operating system (OS) 1042, middleware 1044, or an application 1046.

The input module 1050 may receive a command or data to be used by another component (e.g., the processor 1020) of the electronic device 1001, from the outside (e.g., a user) of the electronic device 1001. The input module 1050 may include, for example, a microphone, a mouse, a keyboard, a key (e.g., a button), or a digital pen (e.g., a stylus pen).

The sound output module 1055 may output sound signals to the outside of the electronic device 1001. The sound output module 1055 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1060 may visually provide information to the outside (e.g., a user) of the electronic device 1001. The display module 1060 may include, for example, a display, a hologram device, or a projector and control circuitry to control a corresponding one of the display, hologram device, and projector. According to an embodiment, the display module 1060 may include a touch sensor adapted to detect a touch, or a pressure sensor adapted to measure the intensity of force incurred by the touch.

The audio module 1070 may convert a sound into an electrical signal and vice versa. According to an embodiment, the audio module 1070 may obtain the sound via the input module 1050, or output the sound via the sound output module 1055 or an external electronic device (e.g., an electronic device 1002 (e.g., a speaker or a headphone)) directly or wirelessly coupled with the electronic device 1001.

The sensor module 1076 may detect an operational state (e.g., power or temperature) of the electronic device 1001 or an environmental state (e.g., a state of a user) external to the electronic device 1001, and then generate an electrical signal or data value corresponding to the detected state. According to an embodiment, the sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device (e.g., the electronic device 1002) directly or wirelessly. According to an embodiment, the interface 1077 may include, for example, a high-definition multimedia interface (HDMI), a universal serial bus (USB) interface, a secure digital (SD) card interface, or an audio interface.

The connecting terminal 1078 may include a connector via which the electronic device 1001 may be physically connected with the external electronic device (e.g., the electronic device 1002). According to an embodiment, the connecting terminal 1078 may include, for example, an HDMI connector, a USB connector, an SD card connector, or an audio connector (e.g., a headphone connector).

The haptic module 1079 may convert an electrical signal into a mechanical stimulus (e.g., a vibration or a movement) or electrical stimulus which may be recognized by a user via his tactile sensation or kinesthetic sensation. According to an embodiment, the haptic module 1079 may include, for example, a motor, a piezoelectric element, or an electric stimulator.

The camera module 1080 may capture a still image or moving images. According to an embodiment, the camera module 1080 may include one or more lenses, image sensors, image signal processors, or flashes.

The power management module 1088 may manage power supplied to the electronic device 1001. According to one embodiment, the power management module 1088 may be implemented as at least part of, for example, a power management integrated circuit (PMIC).

The battery 1089 may supply power to at least one component of the electronic device 1001. According to an embodiment, the battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more communication processors that are operable independently from the processor 1020 (e.g., the application processor (AP)) and supports a direct (e.g., wired) communication or a wireless communication. According to an embodiment, the communication module 1090 may include a wireless communication module 1092 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 1004 via the first network 1098 (e.g., a short-range communication network, such as BluetoothTM, wireless-fidelity (Wi-Fi) direct, or infrared data association (IrDA)) or the second network 1099 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1092 may identify or authenticate the electronic device 1001 in a communication network, such as the first network 1098 or the second network 1099, using subscriber information (e.g., international mobile subscriber identity (IMSI)) stored in the subscriber identification module 1096.

The wireless communication module 1092 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1092 may support a high-frequency band (e.g., the mmWave band) to achieve, e.g., a high data transmission rate. The wireless communication module 10092 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1092 may support various requirements specified in the electronic device 1001, an external electronic device (e.g., the electronic device 1004), or a network system (e.g., the second network 1099). According to an embodiment, the wireless communication module 1092 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 1097 may transmit or receive a signal or power to or from the outside (e.g., the external electronic device) of the electronic device 1001. According to an embodiment, the antenna module 1097 may include an antenna including a radiating element composed of a conductive material or a conductive pattern formed in or on a substrate (e.g., a printed circuit board (PCB)). According to an embodiment, the antenna module 1097 may include a plurality of antennas (e.g., array antennas). In such a case, at least one antenna appropriate for a communication scheme used in the communication network, such as the first network 1098 or the second network 1099, may be selected, for example, by the communication module 1090 from the plurality of antennas. The signal or the power may then be transmitted or received between the communication module 1090 and the external electronic device via the selected at least one antenna. According to an embodiment, another component (e.g., a radio frequency integrated circuit (RFIC)) other than the radiating element may be additionally formed as part of the antenna module 1097.

According to various embodiments, the antenna module 1097 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1001 and the external electronic device 1004 via the server 1008 coupled with the second network 1099. Each of the external electronic devices 1002 or 1004 may be a device of a same type as, or a different type, from the electronic device 1001. According to an embodiment, all or some of operations to be executed at the electronic device 1001 may be executed at one or more of the external electronic devices 1002, or 1008. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1001. The electronic device 1001 may provide the outcome, with or without further processing of the outcome, as at least part of a reply to the request. To that end, a cloud computing, distributed computing, mobile edge computing (MEC), or client-server computing technology may be used, for example. The electronic device 1001 may provide ultra-low latency services using, e.g., distributed computing or mobile edge computing. In another embodiment, the external electronic device 1004 may include an internet-of things (IoT) device. The server 1008 may be an intelligent server using machine learning and/or a neural network. According to an embodiment, the external electronic device 1004 or the server 108 may be included in the second network 1099. The electronic device 1001 may be applied to intelligent services (e.g., smart home, smart city, smart car, or healthcare) based on 5G communication technology or IoT-related technology.

The electronic device according to various embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C" may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments as set forth herein may be implemented as software (e.g., the program 1040) including one or more instructions that are stored in a storage medium (e.g., the internal memory 1036 or external memory 1038) that is readable by a machine (e.g., the electronic device 1001). For example, a processor (e.g., the processor 1020) of the machine (e.g., the electronic device 1001) may invoke at least one of the one or more stored instructions from the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in any other element. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

As described above, an electronic device (e.g., the electronic device 10 of FIG. 1) according to an embodiment of the disclosure may include at least one display, a main frame (e.g., the main frame 11 of FIG. 1) mounted with the at least one display (e.g., the display 13 of FIG. 1) and including at least one antenna, at least one support frame (e.g., the first support frame in FIG. 1) including a communication module, and a hinge module (e.g., the first hinge module 100 of FIG. 1) rotatably interconnecting the main frame and the at least one support frame. The hinge module may include a first hinge arm (e.g., the hinge arm 110 in FIG. 4) coupled to the main frame and including a first conductive pattern (e.g., the first conductive pattern 210 in FIG. 4) on at least one surface thereof, and a second hinge arm (e.g., the second hinge arm 120 in FIG. 4) coupled to the at least one support frame, rotatably connected to the first hinge arm, and including, on a surface facing the at least one surface of the first hinge arm, a second conductive pattern (e.g., the second conductive pattern 220 in FIG. 4) at least partially overlapping the first conductive pattern. The at least one antenna and the communication module may be electrically connected to each other via the first conductive pattern and the second conductive pattern.

According to an embodiment, the electronic device may be a glass-type wearable device configured to be wearable on a head.

According to an embodiment, the first hinge arm may include a first hinge portion connected to the second hinge arm, and the second hinge arm may include a rotation portion rotatably connected to the first hinge portion by a pin member.

According to an embodiment, the first hinge portion may include a first surface oriented in a first direction, a second surface oriented in a second direction opposite to the first direction, and a side surface at least partially surrounding a space between the first surface and the second surface. The first surface and the side surface may include the first conductive pattern. The first conductive pattern may be provided from the first surface along the side surface. One surface of the rotation portion facing the first surface may include the second conductive pattern. The second conductive pattern may be provided along the longitudinal direction of the support frame from the one surface facing the first surface.

According to an embodiment, the first conductive pattern may include a first portion provided on the side surface along the side surface, and a second portion extending from the first portion and provided on the first surface. The second portion may include a first part extending from the first portion and bent at least once, and a second part extending from the first part and bent at least once.

According to an embodiment, the shape of at least a portion of the second conductive pattern may correspond to the shape of the second portion of the first conductive pattern.

According to an embodiment, the first hinge portion may be spaced apart from the rotation portion by a first gap.

According to an embodiment, the first gap may be 0.025 mm or less.

According to an embodiment, the first hinge arm may further include a second hinge portion spaced apart from the first hinge portion by a predetermined gap. The rotation portion may be disposed between the first hinge portion and the second hinge portion and may be rotatably connected to the first hinge portion and the second hinge portion by a pin member. The second hinge portion may include a third conductive pattern.

According to an embodiment, at least one of the first conductive pattern or the second conductive pattern may include at least one of an LDS pattern, a conductive tape, or a flexible printed circuit board (FPCB).

According to an embodiment, at least one of the first conductive pattern or the second conductive pattern may include a linear shape.

According to an embodiment, at least one of the first conductive pattern and the second conductive pattern may include a first ground pattern, a second ground pattern provided to be substantially parallel to the first ground pattern, and an RF signal pattern disposed between the first ground pattern and the second ground pattern and provided to be substantially parallel to the first ground pattern.

According to an embodiment, the hinge module may further include a third hinge arm coupled to the main frame and including a fourth conductive pattern on at least one surface thereof, and a fourth hinge arm coupled to the support frame, rotatably connected to the third hinge arm, and including, on a surface facing the at least one surface of the third hinge arm, a fifth conductive pattern at least partially overlapping the fourth conductive pattern.

According to an embodiment, when the electronic device is in an unfolded state, the first conductive pattern may overlap the second conductive pattern by a first area, and when the electronic device is in a folded state, the first conductive pattern may overlap the second conductive pattern by a second area. The first area may be larger than the second area.

According to an embodiment, the least one display may comprise a first display for a left eye image and a second display for a right eye image; and/or the at least one support frame may comprise a first support frame comprising a communication module and rotatably connected to the main frame by a first hinge module; and a second support frame rotatably connected to the main frame by a second hinge module located at an opposite side to the first hinge module.

As described above, a wearable device (e.g., the electronic device 10 of FIG. 1) according to an embodiment of the disclosure may include a first display for a left eye image, a second display for a right eye image, a main frame mounted with the first display and the second display and including at least one antenna (e.g., the main frame 11 of FIG. 1), a first support frame (e.g., the first support frame 12 in FIG. 1) including a communication module and rotatably connected to the main frame by a first hinge module (e.g., the first hinge module 100 of FIG. 1), and a second support frame rotatably connected to the main frame by a second hinge module located at an opposite side to the first hinge module. The first hinge module may include a first hinge arm (e.g., the hinge arm 110 in FIG. 4) coupled to the main frame and including a first conductive pattern (e.g., the first conductive pattern 210 in FIG. 4) on at least one surface thereof, and a second hinge arm (e.g., the second hinge arm 120 in FIG. 4) coupled to a first support frame, rotatably connected to the first hinge arm, and including, on a surface facing the at least one surface of the first hinge arm, a second conductive pattern (e.g., the second conductive pattern 220 in FIG. 4) at least partially overlapping the first conductive pattern. The at least one antenna and the communication module may be electrically connected to each other via the first conductive pattern and the second conductive pattern.

According to an embodiment, the first hinge arm may include a first hinge portion connected to the second hinge arm. the second hinge arm may include a rotation portion rotatably connected to the first hinge portion by a pin member.

According to an embodiment, the first hinge portion may include a first surface oriented in a first direction, a second surface oriented in a second direction opposite to the first direction, and a side surface at least partially surrounding a space between the first surface and the second surface. The first surface and the side surface may include the first conductive pattern. The first conductive pattern may be provided from the first surface along the side surface. One surface of the rotation portion facing the first surface may include the second conductive pattern. The second conductive pattern may be provided along the longitudinal direction of the first support frame from the one surface facing the first surface.

According to an embodiment, the first conductive pattern may include a first portion provided on the side surface along the side surface, and a second portion extending from the first portion and provided on the first surface. The second portion may include a first part extending from the first portion and bent at least once, and a second part extending from the first part and bent at least once.

According to an embodiment, the shape of at least a portion of the second conductive pattern may correspond to the shape of the second portion of the first conductive pattern.

According to an embodiment, the first hinge module may further include a first hinge unit including a first hinge arm and a second hinge arm, and a second hinge unit spaced apart from the first hinge unit by a predetermined gap and connected to the first hinge unit by a connection structure. The second hinge unit may further include a third hinge arm coupled to the main frame and including a fourth conductive pattern on at least one surface thereof, and a fourth hinge arm coupled to the support frame, rotatably connected to the third hinge arm, and including, on a surface facing the at least one surface of the third hinge arm, a fifth conductive pattern at least partially overlapping the fourth conductive pattern.

## Claims

1. An electronic device comprising:
at least one display;
a main frame mounted with at least one display and comprising at least one antenna;
at least one support frame comprising a communication module; and
a hinge module rotatably interconnecting the main frame and the at least one support frame,
wherein the hinge module comprises:
a first hinge arm coupled to the main frame and comprising a first conductive pattern on at least one surface thereof; and
a second hinge arm coupled to the at least one support frame and rotatably connected to the first hinge arm, the second hinge arm comprising, on a surface facing the at least one surface of the first hinge arm, a second conductive pattern at least partially overlapping the first conductive pattern, and
wherein the at least one antenna and the communication module are electrically connected to each other via the first conductive pattern and the second conductive pattern.

2. The electronic device of claim 1, wherein the electronic device is a glass type wearable device configured to be wearable on a head.

3. The electronic device of claim 1, wherein the first hinge arm comprises a first hinge portion connected to the second hinge arm, and
the second hinge arm comprises a rotation portion rotatably connected to the first hinge portion by a pin member.

4. The electronic device of claim 3, wherein the first hinge portion comprises a first surface oriented in a first direction, a second surface oriented in a second direction opposite to the first direction, and a side surface at least partially surrounding a space between the first surface and the second surface,
the first surface and the side surface comprise the first conductive pattern,
the first conductive pattern is provided from the first surface along the side surface,
one surface of the rotation portion facing the first surface comprises the second conductive pattern, and
the second conductive pattern is provided along the longitudinal direction of the support frame from the one surface facing the first surface.

5. The electronic device of claim 4, wherein the first conductive pattern comprises a first portion provided on the side surface along the side surface, and a second portion extending from the first portion and provided on the first surface, and
the second portion comprises a first part extending from the first portion and bent at least once, and a second part extending from the first part and bent at least once.

6. The electronic device of claim 5, wherein a shape of at least a portion of the second conductive pattern corresponds to a shape of the second portion of the first conductive pattern.

7. The electronic device of claim 3, wherein the first hinge portion is spaced apart from the rotation portion by a first gap.

8. The electronic device of claim 7, wherein the first gap is 0.025 mm or less.

9. The electronic device of claim 3, wherein the first hinge arm further comprises a second hinge portion spaced apart from the first hinge portion by a predetermined gap,
the rotation portion is disposed between the first hinge portion and the second hinge portion, and is rotatably connected to the first hinge portion and the second hinge portion by a pin member, and
the second hinge portion comprises a third conductive pattern.

10. The electronic device of claim 1, wherein at least one of the first conductive pattern or the second conductive pattern comprises at least one of a, laser direct structuring, LDS, pattern, a conductive tape, or a flexible printed circuit board, FPCB.

11. The electronic device of claim 1, wherein at least one of the first conductive pattern or the second conductive pattern comprises a linear shape.

12. The electronic device of claim 1, wherein at least one of the first conductive pattern and the second conductive pattern comprises:
a first ground pattern;
a second ground pattern provided to be substantially parallel to the first ground pattern; and
an RF signal pattern disposed between the first ground pattern and the second ground pattern and provided to be substantially parallel to the first ground pattern.

13. The electronic device of claim 1, wherein the hinge module further comprises:
a third hinge arm coupled to the main frame and comprising a fourth conductive pattern on at least one surface thereof; and
a fourth hinge arm coupled to the support frame and rotatably connected to the third hinge arm, the fourth hinge arm comprising, on a surface facing the at least one surface of the third hinge arm, a fifth conductive pattern at least partially overlapping the fourth conductive pattern.

14. The electronic device of claim 1, wherein the first conductive pattern overlaps the second conductive pattern by a first area in case that the electronic device is in an unfolded state,
the first conductive pattern overlaps the second conductive pattern by a second area in case that the electronic device is in a folded state, and
the first area is larger than the second area.

15. The electronic device of claim 1, wherein the least one display comprises a first display for a left eye image and a second display for a right eye image; and
the at least one support frame comprises a first support frame comprising a communication module and rotatably connected to the main frame by a first hinge module; and a second support frame rotatably connected to the main frame by a second hinge module located at an opposite side to the first hinge module.
